# EUROPÄISCHE PATENTSCHRIFT

(11) **EP 2 143 961 B1**
(45) Veröffentlichungstag und Bekanntmachung des Hinweises auf die Patenterteilung: **25.10.2017**
(21) Anmeldenummer: 09163329.7
(22) Anmeldetag: 22.06.2009
(51) Int. Cl.: F16B 25/00, F16B 33/00, F16B 37/00, F16J 13/12, F16J 15/04

(54) **Abdichtung einer Öffnung**
Bore sealing arrangement
Arrangement d'étancheité d'alésage

(30) Priorität: 09.07.2008 DE 102008032277
(43) Veröffentlichungstag der Anmeldung: 13.01.2010
(73) Patentinhaber: Schaeffler Technologies AG & Co. KG, 91074 Herzogenaurach (DE)
(72) Erfinder: Daniel, Patrick, 66459 Kirkel (DE)
(74) Vertreter: Heinzelmann, Ingo

(56) Entgegenhaltungen:
- EP-A- 1 881 210
- WO-A-92/09816
- DE-A1- 3 123 580
- DE-A1-102005 051 598
- GB-A- 872 839
- US-A- 3 326 260

## Beschreibung

Die vorliegende Erfindung betrifft eine Abdichtung einer Öffnung einer in einem Bauteil vorgesehenen Bohrung.
Aus DE 82 0 4 470 U beispielsweise ist eine Schraube bekannt geworden, die mit drei hintereinander angeordneten Gewindeabschnitten versehen ist, wobei diese Gewindeabschnitte eine so genannte trilobulare Gewindeform aufweisen. Derartige Schrauben weisen neben der ausgezeichneten selbstsperrenden gewindeformenden Eigenschaft auch die Eigenschaft einer hohen Abdichtung zwischen Schraubengewinde und Gegengewinde auf. Nachteilig kann bei derartigen Schrauben sein, dass bei Einschrauben in eine Bohrung eines Bauteils infolge der hohen Materialverdrängung ein Bruch in dem Bauteil auftreten kann. Ein weiterer Nachteil kann darin gesehen werden, dass derartige Schrauben aufwändig in ihrer Herstellung sind. Eine Dichtungsanordnung nach dem Oberbegriff des Anspruchs 1 ist aus dem Dokument US-3326260 bekannt. Aufgabe der vorliegenden Erfindung war es daher, eine Abdichtung einer Öffnung einer in einem Bauteil vorgesehenen Bohrung anzugeben, bei der die Gewindeschraube einerseits eine einwandfreie Abdichtung gewährleistet, wobei die Abdichtung andererseits einfach herzustellen ist.
Erfindungsgemäß wird diese Aufgabe durch die Abdichtung gemäß Anspruch 1 gelöst. Dadurch, dass ein Bohrungsdurchmesser der Bohrung größer als ein Durchmesser des Kernschafts ist, ist zunächst sichergestellt, dass hohe Spannungen in dem Bauteil, in dem die Bohrung vorgesehen ist, vermieden sind.

Unter einer Bohrung wird in der Erfindung eine zylindrische Ausnehmung verstanden, die beispielsweise spangebend mittels Schneidewerkzeugen oder spanlos in einem Spritzwerkzeug oder mittel Umformwerkzeugen erzeugt werden kann. Eine Öffnung der Bohrung bezeichnet ein offenes Ende einer Bohrung.

Bei der erfindungsgemäßen Abdichtung weist die Gewindeschraube in bekannter Weise ein um deren Kernschaft schraubenförmig gewundenes Schraubengewinde auf. Ein zwischen dem Kernschaft der Gewindeschraube und einer Bohrungswandung der Bohrung angeordneter und von dem Schraubengewinde begrenzter schraubenförmiger Kanal ist an wenigstens einer Stelle flüssigkeitsdicht und/oder gasdicht unterbrochen. Demzufolge genügt es erfindungsgemäß, diesen schraubenförmigen Kanal an wenigstens einer Stelle zu unterbrechen.

Ferner kann der schraubenförmige Kanal zusätzlich als Aufnahmeraum zur Aufnahme des während des Einschraubens der Gewindeschraube verdrängten Materials dienen. Für die Erfindung sind insbesondere für das mit der Bohrung versehene Bauteil duktile Werkstoffe geeignet, so dass das Gegengewinde durch Verdrängen von Material problemlos erzeugt werden kann.

Bei einer erfindungsgemäßen Abdichtung können beispielsweise konventionelle Schrauben vorgesehen werden, wobei lediglich vorzusehen ist, dass ein Bohrungsdurchmesser der Bohrungen größer als ein Durchmesser des Kernschafts der Gewindeschraube ist. Der Bohrungsdurchmesser wird so groß bemessen, dass lediglich die Gewindespitze des Schraubengewindes unter Verdrängung von Material des Bauteils ein Gegengewinde in die Bohrungswandung der Bohrung formt.

Anders als bei bekannten Abdichtungen mit gewindeschneidenden Schrauben liegt das Schraubengewinde der Gewindeschraube erfindungsgemäß nicht nahezu vollständig an dem Gegengewinde an, so dass hohe Reibkräfte und hohe Spannungen vermieden sind. Nach dem Einschrauben der Gewindeschraube in die Bohrung des Bauteils unter gleichzeitigem Formen des Innengewindes ist zwar der bereits erwähnte schraubenförmige Kanal gebildet, durch den beispielsweise Öl fließen könnte. In erfindungsgemäßer Weise ist jedoch dieser schraubenförmige Kanal flüssigkeitsdicht und/oder gasdicht unterbrochen.

Bei einer erfindungsgemäßen Weiterbildung ist vorgesehen, das die Bohrungen an wenigstens einer Umfangsstelle eine radiale Einschnürung, beispielsweise Abflachung aufweist, wobei ein radialer Abstand zwischen der Einschnürung und der gegenüberliegenden Bohrungswandung der Bohrung derart bemessen ist, dass die Einschnürung bei eingeschraubter Gewindeschraube den schraubenförmigen Kanal flüssigkeitsdicht und/oder gasdicht unterbricht. Lediglich im Bereich der Einschnürung drängt Material des Bauteils in den schraubenförmigen Kanal voll ein und liegt dichtend einerseits an der Bohrungswandung und andererseits an dem Kernschaft und dem Schraubengewinde der Gewindeschraube an.

Im Bereich der Einschnürung ist der radiale Abstand vorzugsweise gleichgroß oder kleiner als der Durchmesser des Kernschafts der Gewindeschraube. Die Einschnürung kann sich entlang der Bohrungsachse soweit erstrecken, wie die Gewindeschraube in die Bohrung eingreift. Es kann jedoch genügen, wenn die Einschürung sich lediglich über einen kurzen Abschnitt der Bohrung erstreckt, beispielsweise über die axiale Erstreckung einer Windung.

Bei der Erfindung ist zwischen der Gewindeschraube und dem Bauteil eine entlang der Bohrung erstreckte Dichtleiste angeordnet, die flüssigkeitsdicht und/oder gasdicht einerseits an der Bohrungswandung und andererseits an dem Kernschaft und dem Schraubengewinde der Gewindeschraube anliegt. Die Dichtleiste kann sich beispielsweise über die gesamte Länge der Bohrung erstrecken. In diesem Fall wird die Dichtleiste mittels des Schraubengewindes der Gewindeschraube entsprechend der Anzahl der Windungen des Schraubengewindes in eine Vielzahl von Dichtleistenabschnitten unterteilt. Jeder dieser Dichtleistenabschnitte kann flüssigkeitsdicht und/oder gasdicht einerseits an der Bohrungswandung und andererseits an dem Kernschaft und dem Schraubengewinde der Gewindeschraube in dem schraubenförmigen Kanal anliegen. Die Dichtleiste ist als einstückig an das Bauteil angeformter Wulst ausgebildet. Dieser Wulst kann von der Bohrungswandung ausgehend nach radial einwärts vorspringen und sie erstreckt sich entlang der Bohrungsachse. Somit kann auf einfache Art und Weise eine Abdichtung erzielt werden. Die einstückige Dichtleiste kann in günstiger Weise bei Kunststoffteilen vorgesehen werden, die im Spritzverfahren hergestellt werden. Die Dichtleiste, also beispielsweise der Wulst, kann in dem Spritzwerkzeug problemlos vorgesehen werden und beispielsweise aus einem anderen Kunststoff gebildet sein als das Bauteil. Demzufolge kann ein aus Kunststoff im Spritzverfahren hergestelltes Bauteil auf einfache Art und Weise in Verbindung mit einer herkömmlichen Schraube zu der erfindungsgemäßen Abdichtung führen, ohne dass es besonderer Maßnahmen oder aufwändiger Gewindeschrauben bedarf.
Es wurde bereits oben erwähnt, dass es in erfindungsgemäßer Weise genügen kann, den schraubenförmigen Kanal an lediglich einer Stelle zu unterbrechen. Zur Erhöhung oder zur größeren Sicherheit der Abdichtung kann auch vorgesehen werden, dass der schraubenförmige Kanal an mehreren über den Umfang der Bohrung verteilt angeordneten diskreten Stellen flüssigkeitsdicht und/oder gasdicht unterbrochen ist. Erfindungsgemäße Abdichtungen eignen sich besonders zum Schließen von Nachschmieröffnungen, die an Maschinenelementen oftmals redundant eingerichtet sind, die jedoch beispielsweise aufgrund ihrer Lage zum Nachschmieren nicht benötigt werden, und daher verschlossen werden sollen. Insbesondere bei Führungswagen von Linearführungen können erfindungsgemäße Abdichtungen zum Einsatz kommen. Ein derartiger Führungswagen kann einen Tragkörper aufweisen, der über Wälzkörper an einer Führungsschiene gelagert werden kann. Dieser Tragkörper kann mit Kunststoffteilen versehen sein, die mit Nachschmieröffnungen zum Nachschmieren eines die Wälzkörper aufnehmenden Wälzkörperkanales versehen sind. In erfindungsgemäßer Weise wird die oben beschriebene Bohrung als Nachschmieröffnung verwendet, wobei die Gewindeschraube in die entsprechend angepasste Bohrung hineingeschraubt wird.
Nachstehend wird die Erfindung anhand von zwei in insgesamt sechs Figuren abgebildeten Ausführungsbeispielen näher erläutert. Es zeigen:
- Figur 1: eine erfindungsgemäße Abdichtung in einer Draufsicht,
- Figur 2: die erfindungsgemäße Abdichtung aus Figur 1 im Längsschnitt, mit einer Schnittführung entlang der Linie II - II in Figur 1,
- Figuren 3, 4: Detailvergrößerungen aus der Figur 2,
- Figur 5: einen Führungswagen einer Linearführung mit einer erfindungsgemäßen Abdichtung und
- Figur 6: eine Detailvergrößerung aus Figur 5.

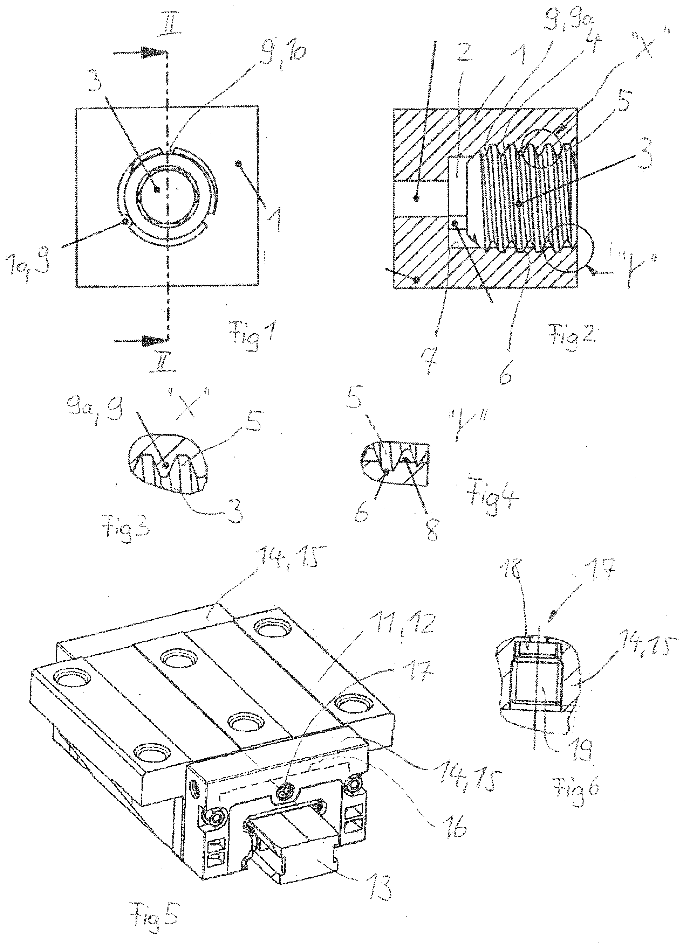

Die in den Figuren 1 bis 4 abgebildete erfindungsgemäße Abdichtung einer Öffnung einer in einem Bauteil 1 vorgesehenen Bohrung 2 ist erfindungsgemäß mit einer Gewindeschraube 3 versehen. Die Gewindeschraube 3 weist einen Kernschaft 4 mit einem Kerndurchmesser auf, wobei um den Kernschaft 4 herum ein Schraubengewinde 5 schraubenförmig gewunden ist. Die Gewindeschraube 3 greift in die Bohrung 2 ein, wobei mittels des Schraubengewindes 5 unter Verdrängung von Material des Bauteils 1 ein Gegengewinde 6 - also ein Innengewinde - in eine Bohrungswandung 7 der Bohrung 2 formt. Das Material wird lediglich weggedrückt und nicht spangebend entfernt.

Der Bohrungsdurchmesser der Bohrung 2 ist größer als der Kerndurchmesser des Kernschafts 4. Der Außendurchmesser des Schraubengewindes 5 ist größer als der Innendurchmesser der Bohrung 2, sodass in der beschriebenen Weise das Schraubengewinde 5 das Gegengewinde 6 erzeugt.

Ferner ist ein zwischen dem Kernschaft 4 der Gewindeschraube 5 und der Bohrungswandung 7 der Bohrung 2 angeordneter und von dem Schraubengewinde 5 begrenzter schraubenförmiger Kanal 8 vorgesehen. Dieser schraubenförmige Kanal 8 ist in der Figur 2 und in vergrößerter Darstellung in der Figur 4 ausschnittsweise zu erkennen. Dieser schraubenförmige Kanal 8 windet sich als Gewinderille entlang dem Schraubengewinde 5 der Gewindeschraube 3. Der schraubenförmige Kanal entsteht dadurch, dass in erfindungsgemäßer Weise der Durchmesser der Bohrung 2 größer ist als der Kerndurchmesser des Kernschaftes 4. In günstiger Weise kann das verdrängte Material in diesen schraubenförmigen Kanal 8 ausweichen, wobei jedoch die erwähnten Durchmesser so aufeinander abgestimmt sind, dass auch nach erfolgter Materialverdrängung der schraubenförmige Kanal erhalten bleibt.

Der materialfreie schraubenförmige Kanal unterstützt ein leichtes Einschrauben der Gewindeschraube 3 in die Bohrung 2, wobei ein Aufreißen des Bauteils 1 vermieden ist. Die Erfindung vermeidet Spannungsüberhöhungen im Bauteil 1, die zu einem unerwünschten Reißen führen könnten. Unerwünschte Spannungserhöhungen könnten eintreten, wenn kein Raum für das verdrängte Material des Bauteils 1 vorhanden ist. In dieser Situation würden in unerwünschter Weise überhöhte Druckspannungen zwischen der Gewindeschraube und dem Bauteil 1 ausgeübt werden, die zu einem Versagen des Bauteils 1 führen könnten. Die Erfindung vermeidet jedoch in der beschriebenen Weise diese unerwünschten Nachteile.

Um sicherzustellen, dass beispielsweise kein Schmiermittel durch den schraubenförmigen Kanal 8 abfließen kann, ist erfindungsgemäß vorgesehen, dass der schraubenförmige Kanal 8 an wenigstens einer Stelle flüssigkeitsdicht und/oder gasdicht unterbrochen ist. Bei dem Ausführungsbeispiel wird dies dadurch erreicht, dass an drei über den Umfang der Bohrung verteilt angeordneten Stellen entlang der Bohrung 2 erstreckte Dichtleisten 9 angeordnet sind, die flüssigkeitsdicht und/oder gasdicht einerseits an der Bohrungswandung 7 und andererseits an dem Kernschaft 4 und dem Schraubengewinde 5 der Gewindeschraube 3 anliegen. Demzufolge ist der schraubenförmige Kanal 8 an einer Vielzahl von Stellen von Dichtleistenabschnitten 9a unterbrochen, so dass kein Schmiermittel entlang des schraubenförmigen Kanals 8 abströmen kann. Im Ausführungsbeispiel ist der schraubenförmige Kanal 8 von jeder Dichtleiste 9 fünfmal unterbrochen, nämlich einmal pro Windung. Insgesamt ist demzufolge im Ausführungsbeispiel der schraubenförmige Kanal 8 an insgesamt 15 Stellen unterbrochen, sodass sichergestellt ist, dass kein Schmiermittel in unerwünschter Weise abfließen kann. Selbstverständlich sind weitere oder weniger Dichtleisten möglich und ebenso kann die Anzahl von Unterbrechungen des Kanals 8 variieren.

In dem Schnitt gemäß Figur 2 ist deutlich zu erkennen, dass im Schnittbereich oberhalb der Bohrungsachse die Dichtleiste 9 in der beschriebenen Weise dichtend anliegt, wobei unterhalb der Bohrungsachse der schraubenförmig ausgebildete Kanal 8 zu erkennen ist.

Figur 3 zeigt in vergrößerter Abbildung die Dichtleiste 9 und ihren Eingriff in die Gewinderillen des Schraubengewindes 5 der Gewindeschraube 3.

Im Ausführungsbeispiel sind die Dichtleisten 9 jeweils als einstückig an das Bauteil 1 angeformter Wulst 10 ausgebildet. Dieser Wulst 10 springt ausgehend von der Bohrungswandung 7 nach radial einwärts vor und erstreckt sich entlang der Bohrungsachse. Dieser Wulst kann aus dem gleichen Werkstoff wie das Bauteil 1 gebildet sein. Im Ausführungsbeispiel ist das Bauteil 1 aus Kunststoff im Spritzverfahren hergestellt, wobei der Wulst 10 auf einfache Art und Weise im Spritzwerkzeug berücksichtigt werden kann. Eine erfindungsgemäße Variante kann darin bestehen, einen weicheren Kunststoff für den Wulst und einen härteren Kunststoff für das Bauteil 1 vorzusehen, was grundsätzlich mit der sogenannten Zwei-Komponenten-Spritztechnik möglich ist.

In den Figuren 5 und 6 ist ein Führungswagen 11 abgebildet, der mit einer erfindungsgemäßen Abdichtung versehen ist. Der Führungswagen 11 weist einen Tragkörper 12 auf, der über hier nicht abgebildete Wälzkörper an einer Führungsschiene 13 wälzgelagert ist. An beiden Stirnseiten des Führungswagens 11 sind aus Kunststoffteilen 14 gebildete Kopfstücke 15 angeordnet, die unter anderem mit hier nur angedeuteten Schmiermittelkanälen 16 versehen sind, um bei einer erforderlichen Nachschmierung Schmiermittel zu den Wälzkörpern und den Wälzkörperbahnen zu fördern. Das Schmiermittel kann von extern über angeschlossene Schmiernippel zugeführt werden. Im Ausführungsbeispiel ist eine standardmäßig vorgesehene, aber nicht benötigte Nachschmieröffnung 17 eingerichtet, die in erfindungsgemäßer Weise abgedichtet ist.

Die Ausschnittsvergrößerung gemäß Figur 6 zeigt die Nachschmieröffnung 17 mit einer Bohrung 18, wobei in die Bohrung 18 eine als Gewindestift 19 ausgebildete Gewindeschraube eingeschraubt ist in der erfindungsgemäßen Weise. Das bedeutet, dass auch hier ein Kerndurchmesser des Gewindestifts 19 kleiner ist als ein Bohrungsdurchmesser der Bohrung 18, wobei ferner ein hier nicht abgebildeter schraubenförmiger Kanal an wenigstens einer Stelle flüssigkeitsdicht und/oder gasdicht unterbrochen ist.

Wenn in erfindungsgemäßer Weise der Bohrungsdurchmesser der Bohrung und der Kerndurchmesser der verwendeten Schrauben aufeinander abgestimmt sind, ist auf einfache Art und Weise eine zuverlässige Verschraubung und erfindungsgemäße Abdichtung bereitgestellt, bei der Spannungsüberhöhungen in dem mit der Bohrung versehenen Bauteil vermieden sind, wobei zugleich eine einwandfreie Abdichtung des schraubenförmigen Kanals gewährleistet ist.

### Bezugszeichenliste

- 1: Bauteil
- 2: Bohrung
- 3: Gewindeschraube
- 4: Kernschaft
- 5: Schraubengewinde
- 6: Gegengewinde
- 7: Bohrungswandung
- 8: schraubenförmiger Kanal
- 9: Dichtleiste
- 9a: Dichtleistenabschnitt
- 10: Wulst
- 11: Führungswagen
- 12: Tragkörper
- 13: Führungsschiene
- 14: Kunststoffteil
- 15: Kopfstück
- 16: Schmiermittelkanal
- 17: Nachschmieröffnung
- 18: Bohrung
- 19: Gewindestift

## Patentansprüche

1. Dichtungsanordnung, umfassend ein Bauteil (1) und eine Gewindeschraube (3), um deren Kernschaft (4) ein schraubenförmig gewundenes Schraubengewinde (5) angeordnet ist, wobei die Gewindeschraube (3) in eine Bohrung (2, 18) des Bauteils (1) eingreift und mittels des Schraubengewindes (5) ein Gegengewinde (6) in eine Bohrungswandung (7) der Bohrung (2) formt, wobei ein Bohrungsdurchmesser der Bohrung (2, 18) größer als ein Durchmesser des Kernschafts (4) ist, wobei ein zwischen dem Kernschaft (4) der Gewindeschraube (3) und der Bohrungswandung (7) der Bohrung (2) angeordneter und von dem Schraubengewinde (5) begrenzter schraubenförmiger Kanal (8) an wenigstens einer Stelle flüssigkeitsdicht und/oder gasdicht unterbrochen ist, sodass eine Öffnung der Bohrung (2, 18) abgedichtet ist, **dadurch gekennzeichnet, dass** zwischen der Gewindeschraube (3) und dem Bauteil (1) eine entlang der Bohrungsachse erstreckte Dichtleisten (9) angeordnet ist, die flüssigkeitsdicht und/oder gasdicht einerseits an der Bohrungswandung (7) und andererseits an dem Kernschaft (4) und dem Schraubengewinde (5) der Gewindeschraube (3) anliegt, wobei die Dichtleiste (9) als einstückig an das Bauteil (1) angeformter Wulst (10) ausgebildet ist.

2. Dichtungsanordnung nach Anspruch 1, bei der die Bohrung (2) an wenigstens einer Umfangsstelle eine radiale Einschnürung, beispielsweise Abflachung aufweist, wobei ein radialer Abstand zwischen der Einschnürung und der gegenüberliegenden Bohrungswandung der Bohrung (7) derart bemessen ist, dass die Einschnürung bei eingeschraubter Gewindeschraube (3) den schraubenförmigen Kanal (8) flüssigkeitsdicht und/oder gasdicht unterbricht.

3. Dichtungsanordnung nach Anspruch 2, bei der der radiale Abstand gleich groß oder kleiner als der Durchmesser des Kernschafts (4) der Gewindeschraube (3) ist.

4. Dichtungsanordnung nach Anspruch 1, bei der die Dichtleiste (9) mittels des Schraubengewindes (5) der Gewindeschraube (3) entsprechend der Anzahl der Windungen des Schraubengewindes (5) in eine Vielzahl von Dichtleistenabschnitten unterteilt ist, wobei jeder Dichtleistenabschnitt (9a) in dem schraubenförmigen Kanal (8) flüssigkeitsdicht und/oder gasdicht einerseits an der Bohrungswandung (7) und andererseits an dem Kernschaft (4) und dem Schraubengewinde (5) der Gewindeschraube (3) anliegt.

5. Dichtungsanordnung nach Anspruch 1, bei der der Wulst (10) von der Bohrungswandung (7) ausgehend nach radial einwärts vorspringt.

6. Dichtungsanordnung nach Anspruch 1, bei der an mehreren über den Umfang der Bohrung verteilt angeordneten, vorzugsweise diskreten Stellen der schraubenförmige Kanal (8) flüssigkeitsdicht und/oder gasdicht unterbrochen ist.

7. Führungswagen (11) einer Linearführung, mit einem Tragkörper (12), der über Wälzkörper an einer Führungsschiene (13) gelagert werden kann, und mit an den Tragkörper (12) angeschlossenen Kunststoffteilen (14), die mit Nachschmieröffnungen (17) zum Nachschmieren eines die Wälzkörper aufnehmenden Wälzkörperkanals versehen sind, wobei eine der Nachschmieröffnungen (17) mit einer Dichtungsanordnung nach einem oder mehreren der vorstehenden Ansprüche abgedichtet ist, wobei das Kunstoffteil (14) das Bauteil (1) und wobei die Nachschmieröffnung (17) die Bohrung (2, 18) bildet.

## Claims

1. Seal arrangement, comprising a component (1) and a threaded bolt (3), around the core shank (4) of which a helically wound screw thread (5) is arranged, the threaded bolt (3) engaging into a bore (2, 18) of the component (1) and forming a counterthread (6) into a bore wall (7) of the bore (2) by means of the screw thread (5), a bore diameter of the bore (2, 18) being greater than a diameter of the core shank (4), a helical channel (8) which is arranged between the core shank (4) of the threaded bolt (3) and the bore wall (7) of the bore (2) and is delimited by the screw thread (5) being interrupted in a liquid-tight and/or gas-tight manner at at least one location, with the result that an opening of the bore (2, 18) is sealed, **characterized in that** a sealing strip (9) which extends along the bore axis is arranged between the threaded bolt (3) and the component (1), which sealing strip (9) bears in a liquid-tight and/or gas-tight manner against the bore wall (7) on one side and against the core shank (4) and the screw thread (5) of the threaded bolt (3) on the other side, the sealing strip (9) being configured as a bead (10) which is integrally moulded in one piece onto the component (1).

2. Seal arrangement according to Claim 1, in which the bore (2) has a radial constriction, for example a flattened portion, at at least one circumferential location, a radial spacing between the constriction and the opposite bore wall of the bore (7) being dimensioned in such a way that, when the threaded bolt (3) is screwed in, the constriction interrupts the helical channel (8) in a liquid-tight and/or gas-tight manner.

3. Seal arrangement according to Claim 2, in which the radial spacing is of equal magnitude to or smaller than the diameter of the core shank (4) of the threaded bolt (3).

4. Seal arrangement according to Claim 1, in which the sealing strip (9) is divided into a multiplicity of sealing strip sections by means of the screw thread (5) of the threaded bolt (3) in a manner which corresponds to the number of windings of the screw thread (5), each sealing strip section (9a) bearing in a liquid-tight and/or gas-tight manner in the helical channel (8) against the bore wall (7) on one side and against the core shank (4) and the screw thread (5) of the threaded bolt (3) on the other side.

5. Seal arrangement according to Claim 1, in which the bead (10) projects radially inwards starting from the bore wall (7).

6. Seal arrangement according to Claim 1, in which the helical channel (8) is interrupted in a liquid-tight and/or gas-tight manner at a plurality of preferably discrete locations which are arranged distributed over the circumference of the bore.

7. Guide carriage (11) of a linear guide, having a carrying body (12) which can be mounted on a guide rail (13) via rolling bodies, and having plastic parts (14) which are connected to the carrying body (12) and are provided with relubricating openings (17) for relubricating a rolling body channel which receives the rolling bodies, one of the relubricating openings (17) being sealed by way of a seal arrangement according to one or more of the preceding claims, the plastic part (14) forming the component (1), and the relubricating opening (17) forming the bore (2, 18).

## Revendications

1. Dispositif formant joint d'étanchéité, comprenant un élément de structure (1) et un boulon fileté (3), autour de la tige centrale (4) duquel est disposé un filetage de boulon (5) torsadé de forme hélicoïdale ;
dans lequel le boulon fileté (3) vient s'engager dans un trou de forage (2, 18) de l'élément de structure (1) et se présente sous la forme d'un contre-filetage (6) dans une paroi de trou de forage (7) du trou de forage (2) au moyen du filetage de boulon (5) ;
dans lequel un diamètre de trou de forage du trou de forage (2, 18) est supérieur à un diamètre de la tige centrale (4) ;
dans lequel un canal (8) de forme hélicoïdale, lequel est délimité par le filetage de boulon (5) et entre lequel est disposé la tige centrale (4) du boulon fileté (3) et la paroi de trou de forage (7) du trou de forage (2), est interrompu de manière étanche aux liquides et/ou de manière étanche aux gaz au niveau de tout au moins un emplacement, de telle sorte qu'une ouverture du trou de forage (2, 18) s'en trouve imperméabilisée ; **caractérisé en ce qu'**une nervure d'étanchéité (9) est disposée entre le boulon fileté (3) et l'élément de structure (1), laquelle est étendue le long de l'axe du trou de forage et laquelle vient prendre appui de manière étanche aux liquides et/ou de manière étanche aux gaz au niveau de la paroi de trou de forage (7), d'une part, et au niveau de la tige centrale (4) et du filetage de boulon (5) du boulon fileté (3), d'autre part ;
dans lequel la nervure d'étanchéité (9) est conçue sous la forme d'un bourrelet (10), lequel est moulé d'une seule pièce à l'élément de structure (1).

2. Dispositif formant joint d'étanchéité selon la revendication 1, pour lequel le trou de forage (2) présente une constriction radiale, par exemple un aplatissement, au niveau de tout au moins un emplacement périphérique ;
dans lequel un écartement radial est mesuré de telle sorte entre la constriction et la paroi de trou de forage du trou de forage (7) qui se trouve à l'opposé que la constriction interrompt le canal (8) de forme hélicoïdale, de manière étanche aux liquides et/ou de manière étanche aux gaz, quand le boulon fileté (3) est vissé.

3. Dispositif formant joint d'étanchéité selon la revendication 2, pour lequel l'écartement radial est aussi grand ou est plus petit que le diamètre de la tige centrale (4) du boulon fileté (3).

4. Dispositif formant joint d'étanchéité selon la revendication 1, pour lequel la nervure d'étanchéité (9) est divisée en une pluralité de sections de nervures d'étanchéité au moyen du filetage de boulon (5) du boulon fileté (3) et en fonction du nombre de spires que comporte le filetage de boulon (5) ;
dans lequel chaque section de nervure d'étanchéité (9a) vient prendre appui dans le canal (8) de forme hélicoïdale, de manière étanche aux liquides et/ou de manière étanche aux gaz, au niveau de la paroi de trou de forage (7), d'une part, et au niveau de la tige centrale (4) et du filetage de boulon (5) du boulon fileté (3), d'autre part.

5. Dispositif formant joint d'étanchéité selon la revendication 1, pour lequel le bourrelet (10) fait saillie de manière radiale vers l'intérieur en partant de la paroi de trou de forage (7).

6. Dispositif formant joint d'étanchéité selon la revendication 1, pour lequel le canal (8) de forme hélicoïdale est interrompu de manière étanche aux liquides et/ou de manière étanche aux gaz en plusieurs emplacements, lesquels sont de préférence discrets et disposés en étant répartis autour de la périphérie du trou de forage.

7. Chariot de guidage (11) d'un guidage linéaire, avec un corps de support (12), lequel peut être positionné au niveau d'un rail de guidage (13) par l'intermédiaire de corps de roulement, et avec des pièces en matière plastique (14), lesquelles sont reliées avec le corps de support (12) et lesquelles sont pourvues d'orifices de lubrification (17) en vue de la lubrification d'un canal de corps de roulement qui reçoit le corps de roulement ; dans lequel l'un des orifices de lubrification (17) est imperméabilisé au moyen d'un dispositif formant joint d'étanchéité selon l'une ou plusieurs des revendications précédentes ;
dans lequel la pièce en matière plastique (14) forme l'élément de structure (1) et dans lequel l'orifice de lubrification (17) forme le trou de forage (2, 18).
